# EUROPEAN PATENT APPLICATION

(11) **EP 1 126 243 A1**
(43) Date of publication of application: **22.08.2001**
(21) Application number: 00830022.0
(22) Date of filing: 18.01.2000
(51) Int. Cl.: G01C 21/20

(54) **An orientation system**

(71) Applicant: Bull HN Information Systems Italia S.p.A., 20010 Pregnana Milanese (Milano) (IT)
(72) Inventor: Cotroneo, Alfredo Enrico, 20131 Milano (IT)
(74) Representative: Pezzoli, Ennio

(57) **Abstract**

An orientation system (100) comprising an electronic device (120) having means (215) for detecting a current position of the electronic device (120), a map (105) representing a region divided into a number of squares (115) each identified by a group of coordinates and means (155, 205) for obtaining the group of coordinates of the square (115) including the current position, the electronic device (120) further comprising output means (140) for providing the obtained group of coordinates.

## Description

The present invention relates to an orientation system.

Various types of orientation system have been proposed in recent years, for example as a help for driving motor vehicles. In particular, in a satellite navigation system an electronic device is provided comprising a display, which visualizes a road map, read from a CD-ROM; a satellite receiver determines a current position of the motor vehicle, which is indicated on the shown road map. Once a destination has been input the navigation system plans an optimal route for reaching this destination; corresponding directions are supplied to the user by means of a vocal synthesiser.

A drawback of the known orientation systems is that they are extremely complex and expensive.

Moreover, said orientation systems are relatively bulky and delicate, so they are not suitable for use in other applications, above all if the electronic device may be subject to jolting.

It is an object of the present invention to overcome the above mentioned drawbacks. To attain this object an orientation system as set out in the first claim is proposed.

Briefly, the invention provides an orientation system comprising an electronic device having means for detecting a current position of the electronic device, a map representing a region divided into a number of squares each identified by a group of coordinates and means for obtaining the group of coordinates of the square including the current position, the electronic device further comprising output means for providing the obtained group of coordinates.

Moreover, the present invention also provides an electronic device and a unit detachable from the electronic device for use in said orientation system and a corresponding orientation method.

Further features and the advantages of the orientation system according to the present invention will be made clear by the following description of a preferred embodiment thereof, given purely by way of a non-restrictive indication, with reference to the attached figures, in which:
Fig. 1 shows the orientation system,
Fig. 2 is a basic block diagram of an electronic device of the orientation system,
Fig. 3 shows the content of a memory of the electronic device.
Fig. 4 is a flow chart showing a method used for managing the electronic device,
Fig. 5 is a further embodiment of the orientation system.

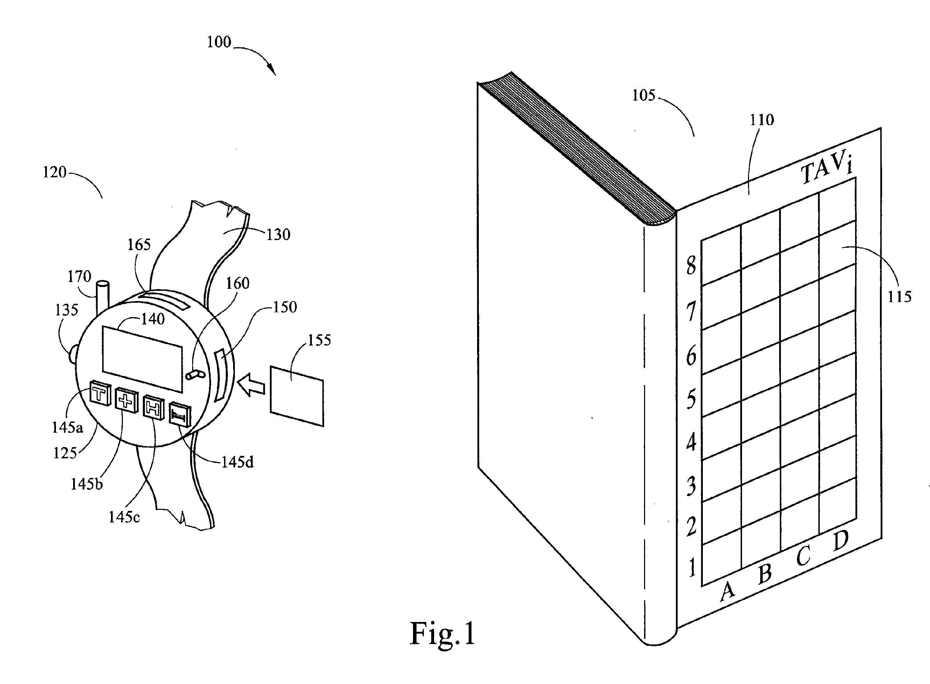

With particular reference to Figure 1, an orientation system 100 is shown comprising a road map 105 on which a given region is shown in scale, with roads and routes highlighted. The road map 105 consists of some tens of sheets 110 joined together, on each of which a table TAVi (for example with i = 1..20) is provided. A grid is overlaid on each table TAVi dividing it into several squares 115. Each square 115 of the table TAVi is identified by a horizontal coordinate x and a vertical coordinate y (where x = A..D and y = 1..8 in the example in question).

Similar considerations are applicable where the road map differs in structure, for example comprising a single sheet, each square is identified by a different group of coordinates, whether the map is geographical, topographical, or the like.

In the orientation system 100 of the present invention, as described in detail below, the road map 105 is associated with an electronic device 120 comprising a unit (for example of the satellite type) capable of detecting the current position thereof. The orientation system 100 obtains the coordinates TAVi, x, y of the square 115 including the current position; said coordinates are supplied to the user of the orientation system 100 by means of an output unit of the electronic device 120.

This allows the user to immediately identify, reasonably accurately, his position on the road map. This result is attained by using a system, which is easy to use, and economical; in particular, the orientation system uses a road map of the traditional type which is therefore familiar to the user.

The electronic device has an extremely simple structure, and is therefore robust and compact. The solution according to the present invention is particularly advantageous if the user is a tourist visiting a city on foot, an excursionist crossing an uninhabited region (on foot or by bike), or similar, (although use in other situations is not excluded).

It must be further noted that the electronic device for use in the orientation system according to the present invention is also suitable for sale separately from the road map, to be used with existing road maps.

In the particular embodiment of the present invention shown in the drawing, the electronic device 120 (of the portable, battery powered type) comprises a rigid casing 125 (disc shaped) having a fixing strap 130 used for example for fastening the electronic device 120 to the handlebars of a bicycle (not shown in the drawing). The electronic device 120 is equipped with an on/off button 135 on a lateral wall of the rigid casing 125.

On the upper base surface of the rigid casing 125 there is a Liquid Crystal Display (LCD) 140. A set of functional keys 145a-145d (four in the example in question) is located under the display 140. Each functional key 145a-145d is associated with a corresponding category of places of interest; in particular, the functional key 145a is associated with tourist sites, the functional key 145b is associated with pharmacies, the functional key 145c is associated with hospitals, and the functional key 145d is associated with hotels.

A slot 150 for the memory card 155, typically an E²PROM flash memory, is located on the side wall of the rigid casing 125. A cursor 160 for expulsion of the memory card 155 (located on the upper base surface of the rigid casing 125) is associated with the slot 150. The electronic device 120 is furthermore equipped with an interface connector 165 (located on the side surface of the rigid casing 125) and an external antenna, 170 (which extends upwards from the rigid casing 125).

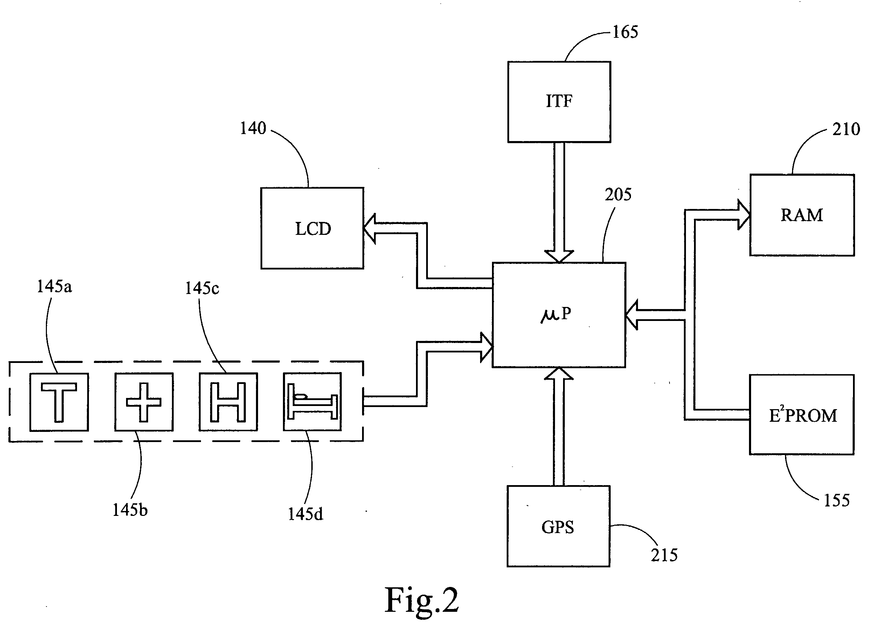

With reference to Figure 2, the electronic device 120 includes a microprocessor (µP) 205 connected to a working memory 210 of the RAM type and to the E²PROM,155. The microprocessor 205 is also connected to the display (LCD) 140, to each of the functional keys 145a-145d, and to the interface connector (ITF) 165. The electronic device 120 is also equipped with a position detector 215 of the GPS (Global Positioning System) type, connected to the external antenna. The GPS detector 215 continually determines (precision within approximately 90 metres) the current position of the electronic device 120 identified by a pair of spatial coordinates Lat,Long (latitude and longitude).

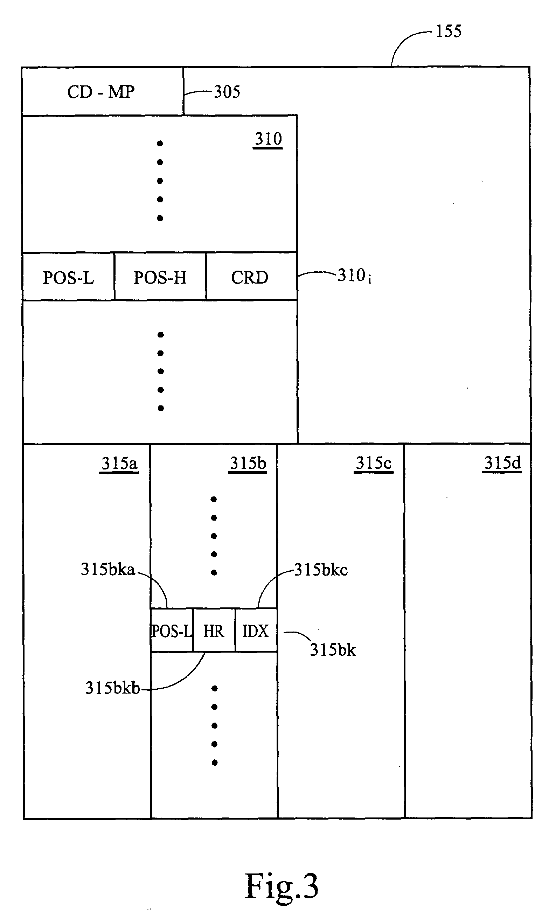

A field 305 which contains an identification code of the road map CD_MP, is memorized in the E²PROM 155 as shown in Figure 3.

A table 310 having a number of lines equal to the number of squares of the road map (640 = 20 x 4 x 8 in the example in question) is then present in the E²PROM 155. A generic line 310i includes a field 310ia which contains the spatial coordinates Lat,Long of a lower left-hand corner of the square (POS_L), a field 310ib which contains the spatial coordinates Lat,Long of a upper right-hand corner of the square (POS_H), and a field 310ic which contains the coordinates TAVi,x,y, of the square (CRD).

Four more tables 315a-315d are memorized in the E²PROM 155 each of which is associated with a corresponding functional key of the electronic device (indicated by 145a-145d in Figure 1). A generic table 315j (with j = a..d) includes a line 315jk for each k^{th} place of interest of the corresponding category (tourist sites, pharmacies, hospitals, hotels) present on the road map. The line 315jk includes a field 315jka which contains the spatial coordinates Lat,Long of the place of interest (POS_I), a field 315jkb which contains a value HR indicating the opening hours of a possible activity associated with the place of interest (for example, opening hours of a museum, the pharmacy, and the like), and a field 315jkc which contains a value IDX identifying the place of interest (for example name, street and street number). The opening hours are set as 0-24 (place of interest always open) in the case of no activity which closes is present.

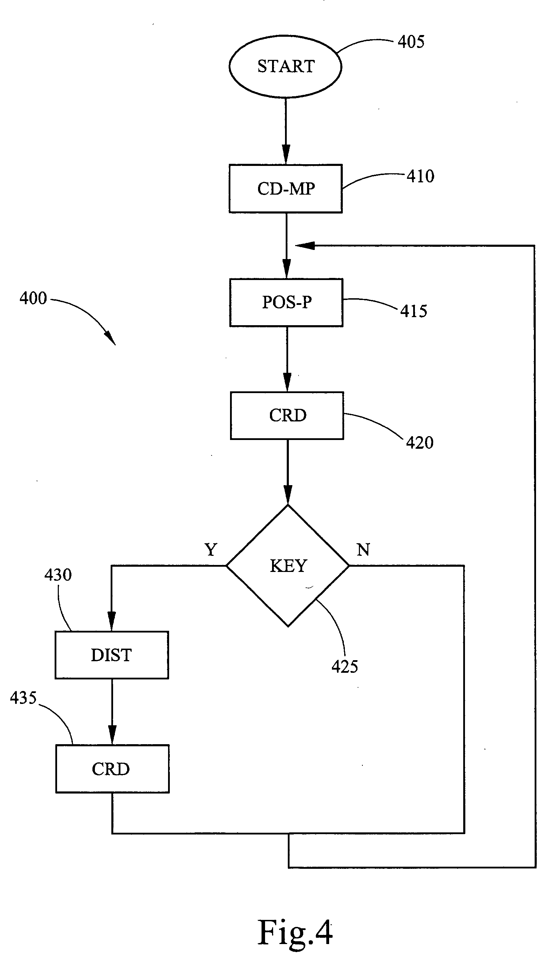

Considering together Figs.1-4, when the electronic device 120 is activated (by pressing the on/off button, 135), the microprocessor 205 carries out a suitable control program 400 (shown in Figure 4) contained in the E²PROM 155. The program 400 begins at block 405 and then moves to block 410 in which the road map identification code CD_MP is read by the E²PROM 155 and is sent to the display 140 to be continually shown to the user.

Passing to the block 415, the microprocessor 205 polls the GPS detector 215 to receive the spatial coordinates Lat,Long of the current position of the electronic device (POS_P). The current position POS_P is compared at the block 420 with the positions POS_L and POS_H (stored in the fields 310ia and 310ib, respectively), to determine the square 115 of the road map 105 which includes the current position POS_P. The corresponding coordinates CRD (read from the field 310ic) are sent to the display 140 to be continually shown to the user.

The program checks at block 425 whether the user has pressed one of the functional keys 145a-145d. If not, the program returns directly to block 415. If so, for example if the functional key 145b associated with the pharmacies has been pressed, the method continues to block 430. In this block the microprocessor 205 checks, for each k^{th} pharmacy of the respective table 315b, if the pharmacy is open, that is whether the opening hours HR (stored in the field 315bkb) include the present time (supplied by the GPS detector 215); if so, the geometrical distance between the current position POS_P and the position POS_I of the pharmacy (stored in the field 315bka) is calculated. The microprocessor 205 selects the nearest pharmacy, which is open, on the basis of a minimum calculated distance (choosing for example the first in the case of several equal values). Passing to block 435, the square of the road map 115 including the position POS_I of the selected pharmacy is determined (in a similar manner). The coordinates CRD (read from field 310ic), the identification value IDX (read from field 315bkc) and the opening hours HR of the pharmacy selected are sent to the display 140 to be shown to the user. The program then returns to block 415 to continually repeat the above-described cycle.

In the embodiment described above, the units (microprocessor 205 and E²PROM 155) used to obtain the coordinates CRD of the square 115 containing the current position POS_P are included in the electronic device 120; this makes the orientation system particularly simple, swift and efficient.

Likewise considerations apply when the electronic device has a different structure (for example being equipped with a supply plug for connection to a cigarette lighter of a motor vehicle, and being without any fixing strap), when it is equipped with a vocal synthesiser (instead of or in addition to the display), when it is used with a positioning system of another type (for example UMTS or GNSS), or when several tables associated with their respective road maps are present in the E²PROM 155, and so on. Alternatively, in each line of the table used to obtain the coordinates of the square containing the current position POS_P only the CRD coordinates are stored, and the microprocessor is replaced by dedicated hardware capable of extrapolating from the current position POS_P the corresponding address on the table, or else the CRD coordinates are extrapolated from the current position POS_P using an algorithm.

Moreover the slot 150 and the relative cursor 160 make it possible to replace the memory card 155 easily. In particular, once the electronic device 120 has been turned off (using the button 135), it is sufficient to manoeuvre the cursor 160 manually to the right so that one extremity of the memory card 155 is pushed out of the slot 150; the memory card 155 can then be removed by grasping the protruding edge. It is then possible to insert a new memory card (pushing it firmly into the slot 150).

This solution makes it possible to use a single electronic device 120 with more than one road map by simply inserting the respective memory card into the slot 150, which could also be sold separately. Similar considerations apply where the memory card is inserted into a housing closed by a door, or in general where one or more of the units used to define the coordinates of the square which includes the current position is removable (sufficiently easily) from the electronic device. However, the orientation system of the present invention leads itself to be implemented even with said units outside the electronic device (for example in a station in radio communication with the electronic device), or with the memory card not removable from the electronic device.

The functional keys described above are particularly useful in various situations, for example in emergencies, or late at night (when it is difficult to find someone to ask for information).

Moreover the interface 165 makes it possible to update the tables 315a-315d very simply, for example by connecting the electronic device 120 to a personal computer (PC). This makes it possible to keep these tables up-to-date, in particular as far as opening hours are concerned.

Similar considerations apply when the functional keys are replaced by a vocal recognition system (or by other input means), when an equivalent memory structure is provided (which, for example, directly associates each place of interest with the coordinates of the square on the road map), when there are a different number of functional keys (possibly even only one), when other categories of places of interest are considered (such as service areas, garages, post offices), when the connector is replaced by another equivalent interface, and the like. Alternatively, the first two (or more) closest places of interest are selected, or all the places of interest in the same square of the road map as the current position, the current time is set by the user, or the places of interest are considered closed even when the difference between the closing time and the current time is less than a time estimated to be necessary to reach them (calculated for example by multiplying the distance by a pre-set average speed), or more generally only the places of interest in which the opening hours of the associated service match the present time are considered.

However, the orientation system of the present invention leads itself to be implemented even without storing the opening hours of the places of interest, without the interface for updating the tables, or even without any functional keys.

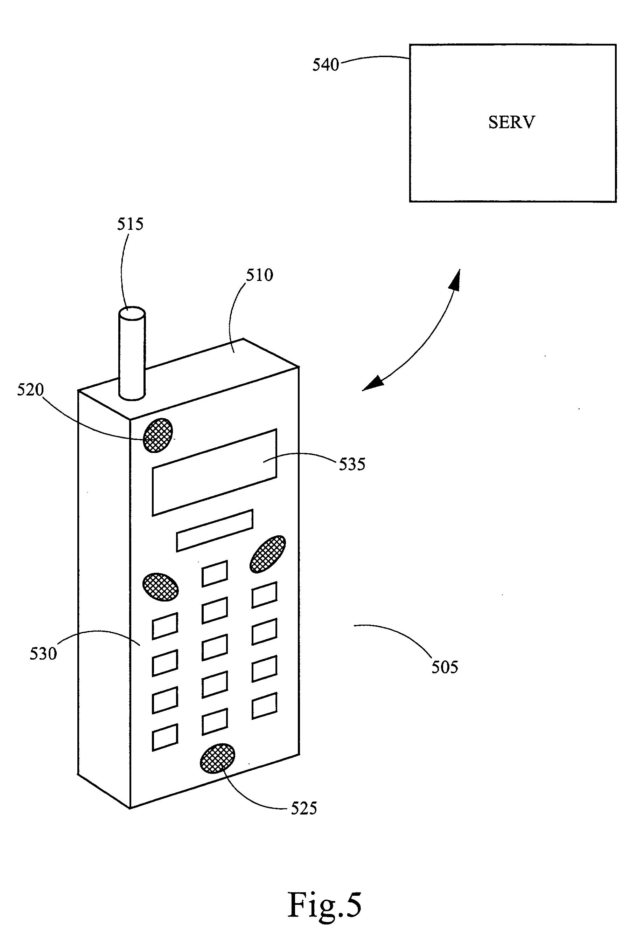

In a different embodiment of this invention, as shown in Figure 5, the electronic device which makes it possible to visualize the coordinates of the square of the road map including the current position is incorporated in a cellular phone 505. The cellular phone 505 consists of a rigid casing 510 from which an antenna 515 projects upwards. A receiver 520 and a transmitter 525 are located in respectively upper and lower positions. A keyboard 530 used for composing the number to be called, an SMS type message to be sent, or for the management of the various command menus, is included between the receiver 520 and the transmitter 525. Above the keyboard 530 there is a display 535 which shows the telephone number called, the messages sent and received, the text of the menus and other service information. The cellular phone 505 is in communication (through a telephone network) with a remote service centre 540 (SERV).

The orientation system is generally deactivated, therefore the cellular phone 505 will operate normally. When the user wishes to locate his position on the road map he activates the orientation system by means of the menus managed by the keyboard 530. The cellular phone 505 sends a corresponding request message to the remote service centre 540 which determines the current position of the cellular phone 505 by means of triangulation with the telephone network relay stations (not shown in the figure). The remote service centre 540 is equipped with a processing system which obtains, as in the previous case, the coordinates TAVi,x,y of the square which includes the current position. These coordinates TAVi,x,y are sent to the cellular phone 505 by means of a further message, and are then shown to the user on the display 535.

Similarly, when the user selects a category of place of interest using the menu managed by the keyboard 530 a corresponding request message is sent to the remote service centre 540. The processing system of the remote service centre 540 selects the nearest place of interest to the current position; the corresponding information is sent to the cellular phone 505 by means of a further message and is then shown to the user on the display 535.

This solution is particularly advantageous, since it makes it possible to use the elements already present on the cellular phone 505 to implement the electronic device. Moreover, the remote service centre makes it possible to centralize the various tables used by the orientation system, so that these tables (in particular the tables associated with the various categories of place of interest) can be continually updated with the greatest of ease.

Similar considerations apply where the telephone is of a different type, for example tacs or satellite, has a different structure, or more generally where any type of mobile telephone is used, or where the information described above is exchanged between the cellular phone and the remote service centre in a different manner and so on. However, the orientation system of this invention leads itself to be implemented even storing the various tables on a memory card inside the cellular phone, providing a separate electronic device (for example fitted in a battery of the cellular phone), or incorporating or connecting the electronic device to a radio receiver, to a two-way radio, and the like.

Naturally, in order to satisfy local and specific requirements, a person skilled in the art may apply to the orientation system described above many modifications and alterations all of which, however, are included within the scope of protection of the invention as defined by the following claims.

## Claims

1. Orientation system (100) comprising an electronic device (120) having means (215) for detecting a current position of the electronic device (120),
characterized by
including a map (105) representing a region divided into a number of squares (115) each identified by a group of coordinates and means (155, 205) for obtaining the group of coordinates of the square (115) including the current position, the electronic device (120) further comprising output means (140) for providing the obtained group of coordinates.

2. Orientation system (100) according to Claim 1, wherein the means for obtaining the group of coordinates of the square (115) including the current position (155, 205) are included in the electronic device (120).

3. Orientation system (100) according to Claim 2, wherein the means for obtaining the group of coordinates of the square (115) including the current position (205, 155) include a unit (155) detachable from the electronic device (120).

4. Orientation system (100) according to Claim 1, further including a remote centre (540), wherein the means for obtaining the group of coordinates of the square (115) including the current position are located, the electronic device (505) including communication means (515) for sending the current position to the service centre (540) and for receiving the group of coordinates obtained by the service centre (540).

5. Orientation system (100) according to any of the Claims from 1 to 4, further comprising means (155) for storing an indication of the position of places of interest in the region and means (205) for selecting at least one of the places of interest according to the distance from the current position and for obtaining the group of coordinates of the square (115) including the at least one selected place of interest, the output means (140) of the electronic device (120) further providing the group of coordinates of the square (115) including the at least one selected place of interest.

6. Orientation system (100) according to Claim 5, wherein the places of interest are divided into a plurality of categories and in which the electronic device (120) comprises input means (145a-145d) for selecting one of the categories, the at least one selected place of interest being chosen only from the places of interest in the selected category.

7. Orientation system (100) according to Claims 5 or 6, wherein a possible service is associated with every place of interest and wherein the storing means (155) is further adapted to store the opening hours of each service, the orientation system (100) comprising means (215) for supplying a current time and the place of interest being selected only from the places of interest whose opening hours for the associated service match the current time.

8. Orientation system (100) according to any of the Claims from 5 to 7, wherein the electronic device (120) further comprises an interface (165) for updating the content of the storing means (155).

9. Orientation system (100) according to any of the Claims from 1 to 8, further comprising a mobile telephone (505), the electronic device being incorporated in the mobile telephone (505).

10. Electronic device (120) for use in the orientation system (100) according to any of the Claims from 1 to 9.

11. Detachable unit (155) for use in the orientation system (100) according to Claim 3.

12. Orientation method comprising the step of providing an electronic device (120) having means (215) for detecting a current position of the electronic device (120),
characterized by steps of
providing a map (105) showing a region divided into a number of squares (115) each identified by a group of coordinates,
obtaining the group of coordinates of the square (115) including the current position,
providing the obtained group of coordinates through output means (140) of the electronic device (120).
